Europäisches Patentamt

European Patent Office

Office européen des brevets

(11) Numéro de publication : **0 340 369 B1**

(19)

(12) # FASCICULE DE BREVET EUROPEEN

(45) Date de publication du fascicule du brevet :
**04.03.92 Bulletin 92/10**

(51) Int. Cl.⁵ : **B23B 31/02,** B23B 51/12

(21) Numéro de dépôt : **88440036.7**

(22) Date de dépôt : **06.05.88**

(54) **Dispositif de montage d'attachements, de porte-outils et d'outils à application cône et face, notamment pour centres d'usinage et de tournage avec changeurs automatiques ou manuels d'outils à queue conique, en particulier au cône 7/24e.**

(43) Date de publication de la demande :
**08.11.89 Bulletin 89/45**

(73) Titulaire : **Pfalzgraf, Emile**
**7, rue de Neuwiller**
**F-67330 Bouxwiller (FR)**

(45) Mention de la délivrance du brevet :
**04.03.92 Bulletin 92/10**

(72) Inventeur : **Pfalzgraf, Emile**
**7, rue de Neuwiller**
**F-67330 Bouxwiller (FR)**

(84) Etats contractants désignés :
**AT BE CH DE ES FR GB GR IT LI LU NL SE**

(74) Mandataire : **Nuss, Pierre**
**10, rue Jacques Kablé**
**F-67000 Strasbourg (FR)**

(56) Documents cités :
**DE-U- 8 437 207**
**DE-U- 8 715 314**
**US-A- 3 444 781**

EP 0 340 369 B1

Jouve, 18, rue Saint-Denis, 75001 PARIS

**Description**

La présente invention concerne le domaine des accessoires de machines-outils, à commande numérique, centres d'usinage et de tournage, cellules et ateliers flexibles, avec changeurs automatiques ou manuels d'outils, et a pour objet un dispositif de montage d'attachement de porte-outils ou d'outils à queue conique, en particulier au cône 7/24e, à application cône et face, notamment pour centres d'usinage et de tournage avec changeurs automatiques ou manuels d'outils. Un tel dispositif selon la préambule de la revendication 1 est décrit par exemple dans le document DE-U-8715 314.

Actuellement la fixation ou le montage d'un attachement d'outils ou d'outillages dans les broches de machines à fraiser, à aléser, à commande numérique, de centres d'usinage ou de cellules et d'ateliers flexibles, est généralement réalisée au moyen de queues coniques dont la conicité la plus courante est de 7/24e, suivant les normes du standard américain. Ces montage et fixation étaient jusquà ce jour satisfaisants et le sont encore actuellement pour certaines opérations.

L'avènement des centres d'usinage au cône 7/24e, présentant la plupart du temps un arrière tronqué et une collerette spéciale pour un changement automatique des outils, a entraîné une modification du cône 7/24e classique avec collerette simple et filetage arrière pour la fixation par tirant fileté.

La majorité des broches de machines construites actuellement sont prévues pour le montage d'outils présentant des cônes 7/24e et des collerettes correspondant aux normes usuelles, seules subsistant encore quelques machines avec des collerettes bien spécifiques à certains constructeurs.

Le type de fixation connu, décrit plus haut, est encore satisfaisant pour certaines applications, mais, du fait de l'augmentation de puissance et de performance importante des machines et centres d'usinage, ainsi que des développements très importants réalisés dans les plaquettes et outils coupants, la fixation des cônes dans les broches n'est plus adaptée aux progrès réalisés par les machines et aux performances des outils et constitue donc un handicap important, la puissance développée par les machines et les forces résultantes pouvant être encaissées par les outils n'étant pas transmissibles au niveau du cône.

En effet, le point critique et la faiblesse des fixations actuelles se situent le plus souvent à la sortie de broche, qui est un point affaiblissant tous les porte-outils ou outils, ces derniers devant respecter un diamètre spécifique de l'outil, qui est le grand diamètre de l'extrémité du cône relié par une portion cylindrique de faible longueur à la collerette. Le même problème se pose également, mais de façon moins cruciale, pour la fixation d'outils au cône 7/24e sur des tours.

Par ailleurs, il a été proposé de réaliser la fixation d'outils au moyen d'une queue cylindrique avec application contre la face avant de la broche. Ce mode de réalisation permet, certes, de résoudre le problème du contact parfait entre les surfaces mais nécessite une modification des broches des machines. En outre, le poids de l'outil, important dans certains cas, risque de modifier son alignement par rapport à l'axe de la broche et le positionnement du changeur d'outils doit s'effectuer dans des tolérances extrêmement serrées en tous sens, afin de permettre un alignement parfait de l'axe de la broche et du porte-outils.

Il a également été proposé, dans le cas où de hautes performances devaient être réalisées, pour obtenir une application simultanée du cône et de la face de la broche, d'exécuter, au moyen de gabarits spécifiques à chaque broche, des cônes standards monoblocs. Un tel mode de réalisation entraîne, cependant, des prix de revient extrêmement élevés et nécessite des tolérances de fabrication quine peuvent être tenues pour une production en série. En outre, les outils ainsi obtenus sont absolument spécifiques à une broche donnée et ne peuvent en aucun cas être interchangeables avec des outils affectés à d'autres broches donc à d'autres machines. Ce mode de réalisation est donc uniquement valable pour répondre à des problèmes spécifiques.

La demande française FR 87 16604 et la demande européenne EP 87440086.4 correspondantes décrivent, en outre, un dispositif de montage à queue conique, en particulier au cône 7/24e, à application cône et face pour attachements, porte-outils et outils, qui est essentiellement constitué par un cône d'introduction dans la broche, par une partie avant centrée dans le cône et pourvue de la collerette d'application contre la face de la broche, par une tirette d'assemblage du cône et de la partie avant, par un ensemble élastique de pression du cône dans la broche en position de verrouillage, monté en compression entre le cône et la partie avant, et par un moyen de réglage dudit ensemble de pression.

Le dispositif conforme à ces dernières demandes permet, sans modification des broches des machines existantes, de réaliser une application simultanée dans le cône de la broche et sur sa face avant lors de l'introduction et du serrage des attachements, de sorte que la rigidité de l'ensemble monté dans la broche est améliorée et que les vibrations engendrées pendant l'usinage sont réduites.

Toutefois, il existe sur le marché des centres d'usinage dont le système de serrage des porte-outils consiste en un élément de serrage du porte-outils, tirant, chargé par un empilage de rondelles développant une faible puissance et n'ayant, par ailleurs, pas de blocage ni de verrouillage mécaniques supplémentaires. Ainsi, dans le cas d'utilisation de certaines fraises, notamment de fraises hérisson, dont l'hélice, destinée à mieux évacuer les copeaux lors de l'usinage, présente une pente axiale opposée à celle de serrage de l'attachement, il apparaît une pression axiale et radiale tellement importante que la pression de serrage du tirant ne permet plus une application rigide du porte-outils et de l'outil dans la broche, cette pression peut même atteindre une force telle que la face arrière de la collerette de la partie avant se décolle de la face avant de la broche, le cône et la partie avant ne formant pas un ensemble suffisamment rigide.

La présente invention a pour but de pallier ces inconvénients.

Elle a, en effet, pour objet un dispositif de montage d'attachements, de porte-outils et d'outils à application cône et face, notamment pour centres d'usinage et de tournage avec changeurs automatiques ou manuels d'outils à queue conique, en particulier au cône 7/24e, qui est constitué par un cône d'introduction dans la broche, par une partie avant centrée dans le cône et pourvue de la collerette d'application contre la face de la broche et par une tirette d'assemblage du cône et de la partie avant, la tirette d'assemblage agissant sur un dispositif intermédiaire de liaison réglable et non déformable entre le cône et la partie avant.

Le dispositif intermédiaire de liaison réglable et non déformable entre le cône et la partie avant est constitué par une pièce intermédiaire montée dans un alésage prévu dans le fond de l'alésage de réception de la partie avant et présentant un taraudage destiné à coopérer avec le filetage de la tirette , par une vis épaulée à pas différentiels, dont la partie de plus grand diamètre pénètre dans le taraudage de la pièce du côté opposé à la tirette et dont la partie de plus petit diamètre pénètre dans un taraudage central de la face arrière de la partie avant , par une bague élastique de maintien de la pièce . dans son logement dans le cône , par un ensemble élastique , sous forme d'un empilage de rondelles Belleville ou d'un ressort de compression, monté entre les faces opposées de la pièce intermédiaire et de la partie avant , par une clavette solidaire du cylindre de centrage de la partie avant et guidée dans une rainure du logement , par un écrou de blocage de l'extrémité correspondante de la vis dans la partie avant et par un écrou, de blocage de la tirette, visé dans l'extrémité opposée de la vis.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en élévation latérale et en coupe du dispositif conforme à l'invention, suivant deux demi-coupes, représentant, celle du haut, un attachement avant réglage définitif et, celle du bas, l'attachement fixé dans la broche, après réglage ;

les figures 2 et 3 sont des vues en élévation latérale représentant le montage de porte-outils (porte- plaquettes) au moyen du dispositif conforme à l'invention ;

la figure 4 est une vue en coupe longitudinale de l'attachement du porte-outils du porte-plaquettes suivant la figure 3 ;

la figure 5 est une vue en élévation par l'arrière de l'attachement suivant la figure 4 ;

la figure 6 est une vue en élévation par l'arrière, partiellement en coupe, d'un porte-plaquettes ;

la figure 7 est une vue analogue à celle des figures 2 et 3 d'un autre montage de porte-outils au moyen du dispositif conforme à l'invention ;

la figure 8 est une vue en élévation latérale, partiellement en coupe, d'une variante de réalisation de l'invention adaptée à la fixation de cassettes de tournage, et

la figure 9 est une vue analogue à celle de la figure 8 d'une autre variante de réalisation de l'invention adaptée à la fixation de cassettes de tournage.

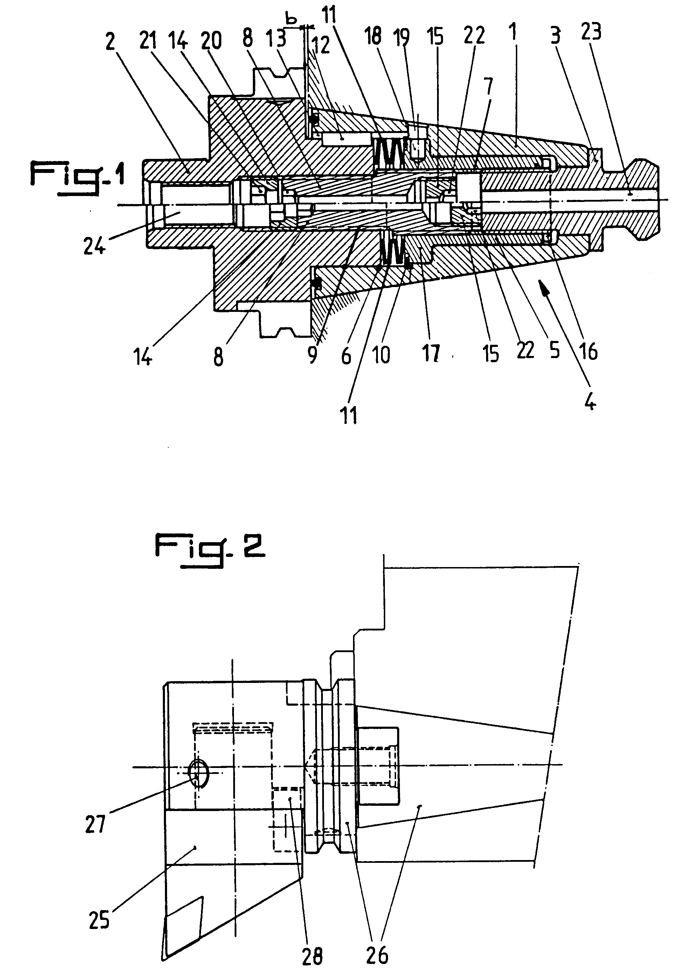

Conformément à l'invention et comme le montre plus particulièrement, à titre d'exemple, la figure 1 des dessins annexés, le dispositif de montage d'attachements, de porte-outils et d'outils à application cône et face, notamment pour centres d'usinage et de tournage avec changeurs automatiques ou manuels d'outils à queue conique, en particulier au cône 7/24e, qui est essentiellement constitué par un cône 1 d'introduction dans la broche, par une partie avant 2 centrée dans le cône 1 et pourvue de la collerette d'application contre la face de la broche et par une tirette 3 d'assemblage du cône 1 et de la partie avant 2, est caractérisé en ce que la tirette d'assemblage 3 agit sur un dispositif intermédiaire de liaison réglable et non déformable 4 entre le cône 1 et la partie avant 2.

Le dispositif intermédiaire de liaison réglable et non déformable 4 entre le cône 1 et la partie avant 2 est constitué par une pièce intermédiaire 5 montée dans un alésage prévu dans le fond de l'alésage 6 de réception de la partie avant 2 et présentant un taraudage 7 destiné à coopérer avec le filetage de la tirette 3, par une vis épaulée 8 à pas différentiels, dont la partie de plus grand diamètre pénètre dans le taraudage 7 de la pièce 5 du côté opposé à la tirette 3 et dont la partie de plus petit diamètre pénètre dans un taraudage central 9 de la face arrière de la partie avant 2, par une bague élastique 10 de maintien de la pièce 5 dans son logement dans le cône 1, par un ensemble élastique 11, sous forme d'un empilage de rondelles Belleville ou d'un ressort de compression, monté entre les faces opposées de la pièce intermédiaire 5 et de la partie avant 2, par une clavette 12 solidaire du cylindre de centrage de la partie avant 2 et guidée dans une rainure 13 du logement 6, par un écrou 14 de blocage de l'extrémité correspondante de la vis 8 dans la partie avant 2 et par un écrou 15, de blocage de la tirette 3, vissé dans l'extrémité opposée de la vis 8.

La pièce intermédiaire 5 est munie à son extrémité tournée vers la tirette 3 d'une rainure transversale 16 de manoeuvre au moyen d'une clé spéciale et présente, à son extrémité tournée vers la partie avant 2, une collerette 17 qui est pourvue, à intervalles réguliers, de perçages radiaux 18, et le cône 1 est muni au niveau desdits perçages radiaux 18 d'au moins un trou 19 de passage d'une pige de retenue à insérer dans l'un desdits perçages radiaux 18.

La vis épaulée 8 est munie d'un perçage axial traversant et est pourvue, dans l'extrémité vissée dans la partie avant 2, d'un polygone de manoeuvre en creux 20, sous forme d'un six pans creux, et les écrous 14 et 15 sont également munis chacun d'un polygone de manoeuvre en creux, respectivement 21 et 22, également sous forme d'un six pans creux, le polygone 22 de l'écrou 15 étant manoeuvrable à travers un perçage 23 de la tirette 3 et le polygone 21 de l'écrou 14 étant manoeuvrable à travers un trou taraudé 24 de réception d'un outil de la partie avant 2.

Le dispositif conforme à l'invention est monté de la manière suivante :

La pièce intermédiaire 5 est introduite dans son logement dans le cône 1 et est maintenue dans ce dernier par l'intermédiaire de la bague élastique 10 qui s'appuie sur sa collerette 17. L'empilage de rondelles Belleville 11 est alors mis en place dans le logement du cône 1 au-dessus de la collerette 17 de la pièce 5. La vis épaulée 8 est alors introduite par sa partie de plus petit diamètre dans le taraudage 9 de la face arrière de la partie avant 2 et appliquée par son épaulement contre ladite face arrière. La mise en place de la vis 8 peut être réalisée par l'intermédiaire de son six pans de manoeuvre 20 au moyen d'une clé traversant le trou taraudé 24 de la partie avant 2 et de l'écrou 14. Avant l'introduction de la vis 8, l'écrou de blocage 14 de la partie avant 2 aura avantageusement été déplacé vers le haut du trou taraudé 9 par manoeuvre au moyen de son polygone à six pans creux 21, afin d'éviter tout contact préalable entre l'écrou 14 et l'extrémité correspondante de la vis 8. A l'extrémité opposée de la vis 8, l'écrou de blocage 15 correspondant est vissé à fond dans son logement de manière à ne pas dépasser sur la face arrière de la vis 8.

Le corps 2 est muni de sa clavette 12 et est introduit dans son alésage de réception 6 prévu dans le cône 1, son guidage contre la rotation étant réalisé par la clavette 12 dans la rainure 13 dudit alésage 6. Lorsque la face arrière de la vis épaulée 8 va buter contre la face de la pièce 5, une clé spéciale est introduite, à travers le trou du cône 1 destiné au passage de la tirette 3, dans la rainure transversale 16 de l'extrémité de la pièce 5 qui est mise en rotation afin de faire pénétrer la vis 8 dans son taraudage 7. Ce vissage a pour effet d'entraîner la pièce 2 dans le logement 6 du cône 1, la partie avant 2 bute alors contre l'empilage de rondelles Belleville 11, dont le but est d'exercer une certaine pression entre la pièce intermédiaire 5 solidaire du cône 1 et ladite partie avant 2 lors du serrage de cette dernière au moyen de la vis 8 dans le cône 1, jusqu'à obtention d'une cote d'écartement b entre la face arrière de la collerette de la partie avant 2 et la face avant du cône 1, nécessaire au serrage final de ladite partie avant 2 contre la face de la broche. Cette cote d'écartement b, qui est fixée par rapport à la ligne de jauge théorique, doit être telle qu'elle corresponde à une distance supérieure à l'addition de toutes les tolérances des normes des attachements et broches. L'empilage de rondelles Belleville 11 est destiné à exercer une pression sur les filetages de la vis épaulée 8 afin de bien les appliquer contre les flancs des taraudages correspondants et d'éviter un déblocage trop facile. Cet empilage 10 fait donc office de frein.

Dès atteinte de la cote b, une pige est introduite à travers le trou 19 dans l'un des perçages radiaux 18 de la collerette 17 de la pièce 5, à savoir celui qui est le plus près du trou 19, afin de modifier le moins possible la cote b.

La tirette 3 est alors introduite, par le trou de l'extrémité correspondante du cône 1, dans la pièce 5 afin de réaliser son blocage contre la face du cône 1 et la pige est retirée.

L'ensemble ainsi obtenu peut alors subir un réglage final dans une broche de machine.

A cet effet, il est introduit manuellement dans la broche et fixé au moyen du serreur de la machine. Le réglage de l'application de la face arrière de la collerette de la partie 2 et de la face avant de la broche, reste à réaliser, le cône 1 étant bien appliqué dans le cône de la broche. Une clé est introduite dans le six pans 20 de la vis 8, qui est mise en rotation afin de faire avancer la partie avant 2 jusqu'à application et serrage contre la face de la broche. La force de serrage à développer sera calculée et indiquée en fonction des types de machines et des serreurs existants, ainsi que de la traction développée par ces derniers. Après l'application des deux faces, l'écrou 14 est bloqué contre la vis 8. L'attachement est démonté de la machine et l'écrou 15 est serré, au moyen d'une clé pénétrant dans son six pans 22 à travers le trou 23 de la tirette 3, contre la face correspondante de cette dernière. L'ensemble est alors prêt à l'utilisation sur une machine, après fixation d'une fraise, d'un outil coupant ou de tout autre outil.

En pratique, le réglage s'effectue relativement rapidement du fait que seule la dernière opération précitée est nécessaire, les autres opérations pouvant être réalisées lors de la préparation et de la recherche des outils préalablement à l'usinage d'une pièce.

La gorge de réception de la bague élastique 10 est avantageusement une gorge tombée de meules pour la rectification de l'alésage 6 de réception de la partie avant 2.

Le dispositif conforme à l'invention est également utilisable sans la vis épaulée 8, la tirette 3 étant alors remplacée par une tirette longue centrée à l'arrière du cône 1 et fixée dans le filetage de la partie avant 2, le blocage mutuel du cône 1 et de la partie avant 2 étant réalisé par le serrage de la tirette longue et ensuite le blocage de l'ensemble par application de l'écrou 14 contre ladite tirette longue.

Les figures 2 à 7 représentent diverses possibilités de fixation d'éléments porte-plaquettes de tournage sur un dispositif conforme à l'invention.

La figure 2 représente un premier ensemble de tournage dont l'élément modulaire porte-plaquettes 25 est placé perpendiculairement à l'axe du dispositif 26, l'élément 25 étant fixé sur le dispositif 26 par un système modulaire comportant deux vis à bout sphérique 27 disposées à 120° et un tenon 28.

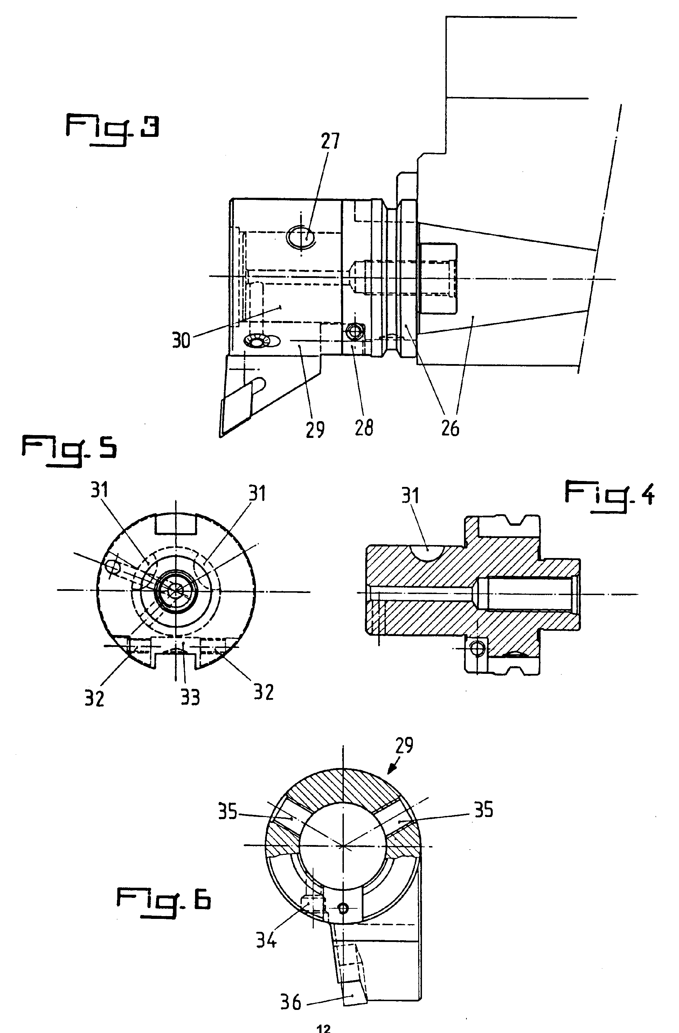

La figure 3 représente un autre ensemble de tournage dont l'élément modulaire porte-plaquettes 29 est placé et centré sur un élément modulaire mâle 30 dans l'axe du dispositif 26, la liaison entre les éléments 29 et 30 étant également réalisée par des vis à bout sphérique 27 et un tenon 28.

Comme le montrent les figures 4 et 5, l'élément modulaire mâle 30 est pourvu d'empreintes sphériques 31 légèrement allongées en direction de la circonférence, permettant un réglage en hauteur du porte-plaquettes 29 au moyen de vis tangentielles 32 s'appuyant sur le tenon 28, qui se loge dans une rainure de plus grande largeur 33 de la collerette de la pièce avant 2. Il est ainsi possible de corriger des erreurs pouvant se produire sur la tourelle porte-outils du tour ou encore de régler une bonne position de l'arête de coupe de la plaquette. Le surdimensionnement de la rainure 33 par rapport au tenon 28 est destiné à permettre un mouvement de rotation du porte-plaquettes 29 pendant son réglage au moyen des vis 32. Les vis à bout sphérique 27 permettent une application extrêmement efficace des faces et un serrage puissant.

La figure 6 représente un porte-plaquettes 29 qui est avantageusement pourvu d'une buse de lubrification 34 et de deux taraudages 35 de réception des vis à bout sphérique 27, ainsi que d'une plaquette rapportée 36, le logement de l'extrémité de la partie avant 2 étant fermé au moyen d'un couvercle (non représenté) rapporté et collé dans un lamage de l'extrémité libre du porte-plaquettes 29. Ainsi, la lubrification au niveau de la plaquette de coupe peut être réalisée sans fuite, tout en évitant une pénétration de copeaux ou autres risquant de détériorer l'attachement.

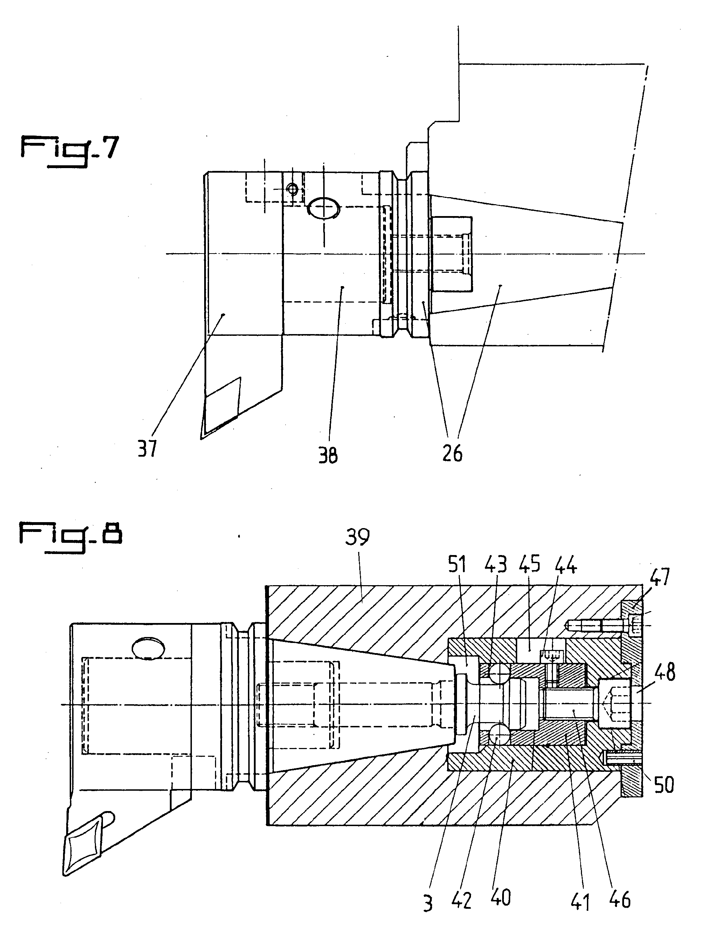

La figure 7 représente un autre porte-plaquettes 37 muni d'une queue modulaire pénétrant dans un élément modulaire femelle 38 monté sur le dispositif 26 conforme à l'invention, le porte-plaquettes 37 étant fixé sur l'élément modulaire femelle 38 au moyen de vis à bout sphérique 27' et d'un tenon 28'. Cette fixation est analogue à celle décrite en regard des figures 4 à 6.

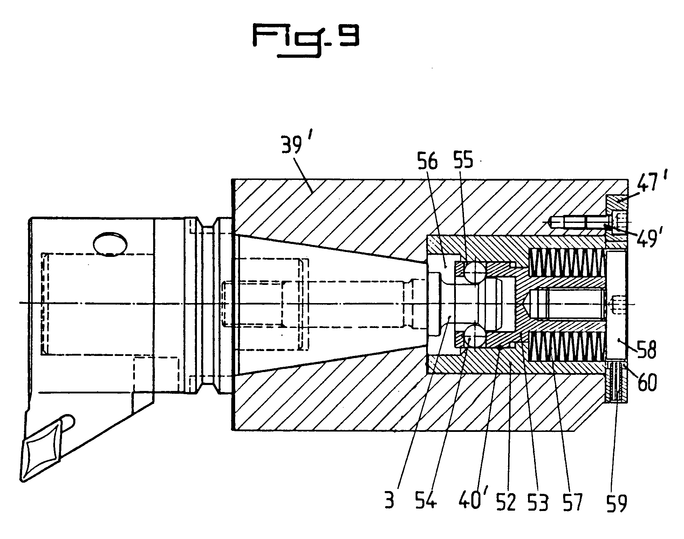

Les figures 8 et 9 représentent des variantes de réalisation de l'invention adaptées à la fixation manuelle ou automatique du dispositif dans des cassettes de tournage. A cet effet, et comme le montre la figure 8, pour la fixation par serrage manuel, le dispositif est monté par son cône 1 dans une cassette 39 avec appui de la collerette de sa face avant contre ladite cassette qui est munie, au niveau de la tirette 3 du dispositif, d'un corps 40 dans lequel est monté, en déplacement, un piston 41 de réception de l'extrémité de la tirette 3, muni de billes de retenue 42 guidées dans des logements 43, et pourvu d'une vis de limitation de course 44 guidée dans une rainure 45 du corps 40, le piston 41 étant déplaçable dans le corps 40 au moyen d'une vis 46, qui est bloquée en translation au moyen d'un flasque 47 monté sur l'extrémité de la cassette 39 et du corps 40, au-dessus du chambrage de réception de la tête de la vis 46, et présentant un trou 48 de passage d'une clé de manoeuvre de ladite vis 46, de préférence à tête à six pans creux, l'assujettissement en rotation entre la cassette 39 et le corps 40 étant réalisé au moyen d'une goupille élastique 50 fixée dans le corps 40 et traversant le flasque 47, le corps 40 présentant, en outre, dans sa partie avant, un lamage 51. De manière connue, le flasque 47 est monté sur la cassette 39 et le corps 40 au moyen de vis 49.

Le corps 40, avec ses pièces constituantes, est inséré dans la cassette 39 et fixé dans cette dernière au moyen du flasque 47. Le dispositif conforme à l'invention est fixé dans la cassette 39 par l'intermédiaire de sa tirette 3, dont le profil de préhension est saisi par les billes 42, qui sont tirées en arrière par la vis 46 par l'intermédiaire du piston 41. Le déblocage est effectué par une rotation inverse de la vis 46 faisant avancer le piston 41 et les billes 42 jusqu'à ce que ces dernières tombent dans le lamage 51 prévu à la partie avant du corps 40, de sorte que le profil de préhension de la tirette est libéré, une poursuite de la rotation de la vis 46, jusqu'à mise en butée de la face arrière de la tirette 3 contre le fond de son logement dans le corps 41, permettant le déblocage du cône et le retrait du dispositif.

Le dispositif décrit ci-dessus peut facilement être adapté pour un serrage automatique, la clé commandant la vis 46 devant simplement être asservie par un moteur électrique, ou autre, réversible.

Selon une autre variante de réalisation de l'invention, suivant la figure 9, pour la fixation par serrage automatique, le dispositif est monté par son cône 1 dans une cassette de fixation 39' et s'appuie, par sa collerette, contre la face avant de ladite cassette 39', qui est munie, en outre, d'un boîtier 40' constitué par un corps 52 dans lequel est monté, à coulissement, un piston 53, présentant sur sa face avant un logement de réception de la partie de préhension de la tirette 3 et qui est pourvu sur sa périphérie de billes de retenue 54 guidées dans des logements 55 et pouvant s'échapper vers l'extérieur dans un lamage 56 de la partie avant du corps 52, par un empilage de rondelles Belleville 57 s'appuyant, à une extrémité, d'une part, dans un lamage de la partie arrière du corps 52 et, d'autre part, à son autre extrémité, contre la tête d'une vis 58 pénétrant dans la face arrière du piston 53, le corps 52 étant maintenu dans la cassette 39' au moyen d'un flasque 47' fixé sur ladite cassette 39' par des vis 49', ce flasque 47' étant muni, en outre, d'une goupille élastique 59 coopérant avec une rainure 60 dudit corps 52 pour un assujetissement en rotation. Le flasque 47' permet le blocage du boîtier 40' contre le fond de son alésage de réception dans la cassette 39'.

Selon une autre caractéristique de l'invention, le piston 53 présente un épaulement d'appui de fin de course arrière dans le logement de la pièce 52.

Après montage du boîtier 40' dans son alésage de la cassette 39' et serrage au moyen du flasque 47', son assujettissement en position étant réalisé au moyen de la goupille 59 solidaire dudit flasque 47' et coopérant avec la rainure du corps 52, la tirette 3 du dispositif porte-outils peut être montée entre les billes 54, qui sont tirées en arrière par l'intermédiaire du piston 53 contre l'action des rondelles Belleville 57 sur la vis 58.

Le déblocage du porte-outils est effectué au moyen d'un système d'éjection extérieur et indépendant, hydraulique, pneumatique ou mécanique, poussant axialement la vis 58 en direction du porte-outils afin de faire avancer le piston 53 par compression des rondelles 57 de manière à permettre le déplacement radial des billes 54 vers la paroi du lamage 56 et la libération de la tirette 3, l'éjection du porte-outils étant réalisée par une poursuite de l'avance du piston 53 jusqu'à ce qu'il bute contre la face arrière de la tirette 3.

Le porte-outils peut être retiré par un bras changeur, ou manuellement, et la pression sur la vis 58, et donc sur le piston 53, est maintenue jusqu'à l'introduction d'un nouveau porte-outils dont le serrage sera effectué comme décrit précédemment.

Bien entendu, les billes 54 et 42 utilisées peuvent être remplacées, comme il est usuel sur les centres d'usinage, par un système de pinces fendues profilées présentant de nombreuses fentes autorisant une grande flexibilité permettant l'ouverture des pinces au moment de l'avance du piston en direction du porte-outils et leur fermeture dans le cas d'un déplacement inverse, ces pinces étant d'une seule pièce ou faisant corps avec le piston et présentant un rebord antérieur intérieur de plus faible diamètre formant un bec de préhension de la tirette, dont la face coopérant avec lesdites pinces est droite et perpendiculaire à l'axe.

Les boîtiers suivant les figures 8 et 9 sont facilement interchangeables dans leurs cassettes 39 et 39' sans modification, du fait qu'elles présentent les mêmes dimensions et encombrements, seul leur flasque arrière 47 et 47' de montage étant à échanger.

Grâce à l'invention, il est possible de réaliser un dispositif de montage d'attachements, de porte-outils et d'outils à application cône et face, notamment pour centres d'usinage et de tournage avec changeurs automatiques ou manuels d'outils à queue conique, en particulier au cône 7/24e, permettant une application cône et face, avec une pression éventuelle de serrage faible et présentant les avantages d'un attachement monobloc, à savoir, notamment, la rigidité, indépendamment des caractéristiques du serreur de la machine, dont toute la pression s'exerce aussi bien sur le cône 1 que sur la pièce avant 2.

En outre, le dispositif conforme à l'invention peut être utilisé de manière interchangeable sur tous centres d'usinage et de tournage.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

**Revendications**

1. Dispositif de montage d'attachements, de porte-outils et d'outils à application cône et face, notamment pour centres d'usinage et de tournage avec changeurs automatiques ou manuels d'outils à queue conique, en particulier au cône 7/24e, constitué par un cône (1) d'introduction dans la broche, par une partie avant (2) centrée dans le cône (1) et pourvue de la collerette d'application contre la face de la broche et par une tirette (3) d'assemblage du cône (1) et de la partie avant (2), la tirette d'assemblage (3) agissant sur un dispositif intermédiaire de liaison réglable et non déformable (4) entre le cône (1) et la partie avant (2), caractérisé en ce que le dispositif intermédiaire de liaison réglable et non déformable (4) entre le cône (1) et la partie avant (2) est constitué par une pièce intermédiaire (5) montée dans un alésage prévu dans le fond de l'alésage (6) de réception de la partie avant (2) et présentant un taraudage (7) destiné à coopérer avec le filetage de la tirette (3), par une vis épaulée (8) à pas différentiels, dont la partie de plus grand diamètre pénètre dans le taraudage (7) de la pièce (5) du côté opposé à la tirette (3) et dont la partie de plus petit diamètre pénètre dans un taraudage central (9) de la face arrière de la partie avant (2), par une bague élastique (10) de maintien de la pièce (5) dans son logement dans le cône (1), par un ensemble élastique (11), sous forme d'un empilage de rondelles Belleville ou d'un ressort de compression, monté entre les faces opposées de la pièce intermédiaire (5) et de la partie avant (2), par une clavette (12) solidaire du cylindre de centrage de la partie avant (2) et guidée dans une rainure (13) du logement (6), par un écrou (14) de blocage de l'extrémité correspondante de la vis (8) dans la partie avant (2) et par un écrou (15), de blocage de la tirette (3), vissé dans l'extrémité opposée de la vis (8).

2. Dispositif, suivant la revendication 1, caractérisé en ce que la pièce intermédiaire (5) est munie à son extrémité tournée vers la tirette (3) d'une rainure transversale (16) de manoeuvre au moyen d'une clé spéciale et présente, à son extrémité tournée vers la partie avant (2), une collerette (17) gui est pourvue, à intervalles réguliers, de perçages radiaux (18), et le cône (1) est muni au niveau desdits perçages radiaux (18) d'au moins un trou (19) de passage d'une pige de retenue à insérer dans l'un desdits perçages radiaux (18).

3. Dispositif, suivant la revendication 1, caractérisé en ce que la vis épaulée (8) est munie d'un perçage axial traversant et est pourvue, dans l'extrémité vissée dans la partie avant (2), d'un polygone de manoeuvre en creux (20), sous forme d'un six pans creux, et les écrous (14 et 15) sont également munis chacun d'un polygone de manoeuvre en creux, respectivement (21 et 22), également sous forme d'un six pans creux, le polygone (22) de l'écrou (15) étant manoeuvrable à travers un perçage (23) de la tirette (3) et le polygone (21) de l'écrou (14) étant manoeuvrable à travers un trou taraudé (24) de réception d'un outil de la partie avant (2).

4. Dispositif, suivant l'une quelconque des revendications 1 et 3, caractérisé en ce qu'il ne comporte pas de vis épaulée (8), la tirette (3) étant une tirette longue centrée à l'arrière du cône (1) et fixée dans le filetage de la partie avant (2), le blocage mutuel du cône (1) et de la partie avant (2) étant réalisé par le serrage de la tirette longue et ensuite le blocage de l'ensemble par application de l'écrou (14) contre ladite tirette longue.

5. Dispositif, suivant l'une quelconque des revendications 1 à 4, caractérisé en ce qu'il est pourvu d'un élément modulaire porte-plaquettes (25, 29) fixé par un système modulaire comportant deux vis à bout sphérique (27) disposées à 120° et un tenon (28) sur un élément modulaire mâle (30) monté dans le dispositif et pourvu d'empreintes sphériques (31) légèrement allongées en direction de la circonférence, permettant un réglage en hauteur du porte-plaquettes (29) au moyen de vis tangentielles (32) s'appuyant sur le tenon (28), gui se loge dans une rainure de plus grande largeur (33) de la collerette de la pièce avant (2).

6. Dispositif, suivant l'une quelconque des revendications 1 à 4, caractérisé en ce qu'il est monté par son cône (1) dans une cassette (39) avec appui de la collerette de sa face avant contre ladite cassette gui est munie, au niveau de la tirette (3) du dispositif, d'un corps (40) dans lequel est monté, en déplacement, un piston (41) de réception de l'extrémité de la tirette (3), muni de billes de retenue (42) guidées dans des logements (43), et pourvu d'une vis de limitation de course (44) guidée dans une rainure (45) du corps (40), le piston (41) étant déplaçable dans le corps (40) au moyen d'une vis (46), gui est bloquée en translation au moyen d'un flasque (47), monté sur l'extrémité de la cassette (39) et du corps (40), au-dessus du chambrage de réception de la tête de la vis (46), et présentant un trou (48) de passage d'une clé de manoeuvre de ladite vis (46), de préférence à tête à six pans creux, l'assujettissement en rotation entre la cassette (39) et le corps (40) étant réalisé au moyen d'une goupille élastique (50) fixée dans le corps (40) et traversant le flasque (47), le corps (40) présentant, en outre, dans sa partie avant, un lamage (51).

7. Dispositif, suivant l'une quelconque des revendications 1 à 4, caractérisé en ce qu'il est monté par son cône (1) dans une cassette de fixation (39') et s'appuie, par sa collerette, contre la face avant de ladite cassette (39'), gui est munie, en outre, d'un boîtier (40') constitué par un corps (52) dans lequel est monté, à coulissement, un piston (53), présentant sur sa face avant un logement de réception de la partie de préhension de la tirette (3) et gui est pourvu sur sa périphérie de billes de retenue (54) guidées dans des logements (55) et pouvant s'échapper vers l'extérieur dans un lamage (56) de la partie avant du corps (52), par un empilage de rondelles Belleville (57) s'appuyant, à une extrémité, d'une part, dans un lamage de la partie arrière du corps (52) et, d'autre part, à son autre extrémité, contre la tête d'une vis (58) pénétrant dans la face arrière du piston (53), le corps (52) étant maintenu dans la cassette (39') au moyen d'un flasque (47') fixé sur ladite cassette (39') par des vis (49'), ce flasque (47') étant muni, en outre, d'une goupille élastique (59) coopérant avec une rainure (60) dudit corps (52) pour un assujetissement en rotation.

8. Dispositif, suivant la revendication 7, caractérisé en ce que le piston (53) présente un épaulement d'appui de fin de course arrière dans le logement de la pièce 52.

**Patentansprüche**

1. Vorrichtung zur Befestigung von Werkzeughaltern und Werkzeugen mit konischen und planen Tragflächen, insbesondere für Bearbeitungszentren mit automatischen oder manuellen Werkzeugwechslern mit einem Kegelschaft, insbesondere mit einem Steilkegelschaft, aufgebaut aus einem Aufnahmekegel (1) in einer Welle, aus einem am Aufnahmekegel (1) zentrierten Vorderteil (2), an dem in Richtung auf die Welle ein Einsatzkragen vorgesehen ist, und mit einem Zugelement (3) zur Verbindung von Aufnahmekegel (1) und Vorderteil (2), welches Zugelement (3) ein Zwischenelement (4) zur regelbaren und nicht verformbaren Verbindung von Aufnahmekegel (1) und Vorderteil (2) betätigt, dadurch gekennzeichnet, daß das Zwischenelement (4) zur regelbaren und nicht verformbaren Verbindung zwischen Aufnahmekegel (1) und Vorderteil (2) aus einem Zwischenstück (5), das in einer hinten in einer Aufnahmebohrung (6) des Vorderteils (2) vorgesehen Bohrung gelegen ist und das ein in ein Außengewinde des Zugelement (3) eingreifendes Innengewinde (7) aufweist, aus einer mehrgängigen, abgesetzten Schraube (8), deren Abschnitt größeren Durchmessers in das Innengewinde (7) des Zwischenstücks (5) auf der dem Zugelement (3) entgegengesetzten Seite eingreift und deren Abschnitt geringeren Durchmessers in ein zentrales Innengewinde (9) eines hinteren Abschnitts des Vorderteils (2) eingreift, sowie aus einem Spannring (10) zur Halterung des Zwischenstückes (5) in seiner Stellung im Aufnahmekegel (1) und aus einer elastischen Vorrichtung (11) in Form einer Schichtung von Belleville-Ringen oder in Form einer Druckfederung, gelegen zwischen den einander gegenüberliegenden Flächen von Zwischenstück (5) und Vorderteil (2), aus einem mit dem Zentrierungszylinder des Vorderteils (2) einstückigen, in einer Rille (13) der Aufnahmebohrung (6) geführten Keil (12) sowie aus einer dem Ende der Schraube (8) im Vorderteil (2) zugehörigen Verriegelungsmutter (14) und einer am entgegengesetzten Ende der Schraube (8) befestigten Verriegelungsmutter (15) des Zugelement (3) aufgebaut ist.

2. Vorrichtung nach Anspruch 1, dadurch gekennzeichnet, daß das Zwischenstück (5) in seinem dem Zugelement (3) zugewandten Ende mit einer Querrille (16) zur Betätigung mit einem Spezialschlüssel versehen ist und an seinem dem Vorderteil (2) zugewandten Ende einen Kragen (17) aufweist, der in regelmäßigen Abständen radiale Bohrungen (18) aufweist, und daß der Aufnahmekegel (1) im Bereich besagter radialer Bohrungen (18) mit wenigstens einer Durchgriffsöffnung (19) versehen ist, um einen Haltestift in eine der besagten radialen Bohrungen (18) einzusetzen.

3. Vorrichtung nach Anspruch 1, dadurch gekennzeichnet, daß die abgesetzte Schraube (8) eine durchgehende axiale Bohrung aufweist und im im Vorderteil (2) verschraubten Ende eine polygonförmige Betätigungsausnehmung vorzugsweise in Form eines Innensechskant vorgesehen ist und daß auch die Verriegelungsmuttern (14,15) polygonförmige Betätigungsausnehmungen (21,22) vorzugsweise ebenfalls in Form eines Innensechskant aufweisen, wobei die Ausnehmung (22) der Verriegelungsmutter (15) durch eine Bohrung (23) des Zugelementes (3) hindurch und die Ausnehmung (21) der Verriegelungsmutter (14) durch die Gewindebohrung (24) der Werkzeugaufnahme des Vorderteils (2) hindurch betätigbar sind.

4. Vorrichtung nach einem der Ansprüche 1 bis 3, dadurch gekennzeichnet, daß sie keine abgesetzte Schraube (8) aufweist, wobei als Zugelement (3) ein langes Zugelement Verwendung findet, das im hinteren Bereich des Aufnahmekegels (1) zentriert und in einem Gewinde des Vorderteils (2) fixiert ist, wobei eine gemeinsame Verriegelung von Aufnahmekegel (1) und Vorderteil (2) durch Spannen des langen Zugelementes und anschließendes Verriegeln der Einrichtung unter Anziehen der Verriegelungsmutter (14) gegenüber besagtem langem Zugelement verwirklicht wird.

5. Vorrichtung nach einem der Ansprüche 1 bis 4, dadurch gekennzeichnet, daß sie mit einem modularen Klemmhalterelement (25,29) versehen ist, das durch ein modulares System fixiert ist, das zwei Schrauben (27) mit Rundkuppen, angeordnet bei 120°, und einen Zapfen (28) auf einem männlichen Modulelment (30) aufweist, das in der Vorrichtung angeordnet und mit runden, in Umfangsrichtung leicht verlängerten Vertiefungen (31) versehen ist, damit eine Höhenjustierung des Klemmhalterelements (29) mittels tangentieller Schrauben (32) möglich ist, die sich auf dem Zapfen (28) abstützen, der in einer Rille (33) größerer Breite des Kragens des Vorderteils (2) aufgenommen ist.

6. Vorrichtung nach einem der Ansprüche 1 bis 4, dadurch gekennzeichnet, daß sie an ihrem Aufnahmekegel (1) in einer Kasette (39) mit Abstützung der Vorderseite des Kragens auf besagter Kasette aufgenommen ist, die im Bereich des Zugelements (3) der Vorrichtung mit einem Gehäuse (40) versehen ist, in dem ein verschiebbarer Kolben (41) zur Aufnahme des Endes des Zugelementes (3) angeordnet ist und das in Lagern (43) geführte Rückhaltekugeln (42) sowie eine die Bewegung des Kolbens durch ihre Lage in einer Ausnehmung (45) des Gehäuses begrenzende Schraube (44) aufweist, wobei der Kolben (41) im Gehäuse (40) mittels einer in ihrer Bewegung durch einen Flansch (47) blockierte Schraube (46) verschiebbar ist, der auf dem Ende der Kasette (39) und des Gehäuses (40) über einer Aufnahmekammer für den Kopf der Schraube (46) angeordnet ist und eine Durchgriffsöffnung (48) für einen Schlüssel zur Betätigung besagter Schraube (46) mit vorzugsweise einem Schraubenkopf mit Innensechskant aufweist, wobei die Drehjustierung zwischen Kasette (39) und Gehäuse (40) mittels eines elastischen Justierstiftes (50) verwirklicht wird, der im Gehäuse (40) fixiert den Flansch (47) durchgreift, und das Gehäuse andererseits in seinem vorderen Bereich eine Ausnehmung (51) aufweist.

7. Vorrichtung nach einem der Ansprüche 1 bis 4, dadurch gekennzeichnet, daß sie mit ihrem Aufnahmekegel (1) in einer Befestigungskasette (39') befestigt ist und sich mit ihrem Kragen auf der Vorderseite besagter Kasette (39′) abstützt, die weiter eine Lagerung (40′) aufweist, aufgebaut aus einem Gehäuse (52), in dem ein verschiebbarer Kolben (53) angeordnet ist, der auf seiner Vorderseite ein Aufnahmelager für den Verbindungsteil des Zugelementes (3) aufweist, auf seiner Peripherie mit in Lagern (55) geführten Rückhaltekugeln (54) versehen ist und der nach außen in eine Ausnehmung (56) des Vorderteils des Gehäuses (52) ausweichen kann, und aus einer Schichtung von Belleville-Ringen, die sich am einen Ende einerseits in einer Ausnehmung des Hinterteils des Gehäuses (52) und am anderen Ende andererseits gegen den Kopf einer Schraube (58) abstützen, die in den hinteren Teil des Kolbens (53) eingreift, wobei das Gehäuse (52) in der Kasette (39′) mittels eines Flansch (47′) gehalten wird, der in besagter Kasette (39′) durch die Schraube (49′) fixiert ist, welcher Flansch andererseits einen elastischen Justierstift (59) aufweist, der mit einer Rille des Gehäuse (52) für eine Drehjustierung zusammenarbeitet.

8. Vorrichtung nach Anspruch 7, dadurch gekennzeichnet, daß der Kolben (53) eine Stützschulter für das Ende des hinteren Hubs in der Lagerung des Gehäuses (52) aufweist.

## Claims

1. Device for mounting attachments, toolholders and tools having conical and facial contact surfaces, in particular for machining and turning centres with automatic or manual conical taper tool changers, in particular with a 7/24 cone, consisting of a cone (1) for introduction into the spindle, a front portion (2) centred in the cone (1) and provided with the collar for application to the face of the spindle and a pull member (3) for assembling the cone (1) and the front portion (2), the assembling pull member (3) acting upon an adjustable, non-deformable intermediate connecting device (4) between the cone (1) and the front portion (2), characterised in that the adjustable, non-deformable intermediate connecting device (4) between the cone (1) and the front portion (2) consists of an intermediate part (5) mounted in a bore provided in the bottom of the bore (6) for receiving the front portion (2) and having a tapping (7) intended to mate with the thread of the pull member (3), a shouldered screw (8) having different pitches of which the greatest diameter portion penetrates into the tapping (7) of the part (5) on the side remote from the pull member (3) and of which the smallest diameter portion penetrates into a central tapping (9) of the rear face of the front portion (2), a resilient ring (10) for holding the part (5) in its housing in the cone (1), a resilient unit (11), in the form of a stack of Belleville spring washers or of a compression spring, which is mounted between the opposing faces of the intermediate part (5) and the front portion (2), a key (12) which is integral with the centring cylinder of the front portion (2) and is guided in a groove (13) in the housing (6), a nut (14) for locking the corresponding end of the screw (8) in the front portion (2) and a nut (15) for locking the pull member (3) which is screwed in the opposite end of the screw (8).

2. Device according to claim 1, characterised in that the intermediate part (5) is equipped, at its end turned toward the pull member (3), with a transverse groove (16) for manipulation by means of a special spanner and has, at its end turned toward the front portion (2), a collar (17) provided with radial perforations (18) at regular intervals, and the cone (1) is equipped, in the region of said radial perforations (18), with at least one hole (19) for the passage of a retaining measuring rod to be inserted in one of said radial perforations (18).

3. Device according to claim 1, characterised in that the shouldered screw (8) is equipped with a traversing axial perforation and is provided, in the end screwed into the front portion (2), with a recessed manipulating polygon (20) in the form of a hexagon socket, and the nuts (14 and 15) are also each equipped with a recessed manipulating polygon (21 and 22) respectively also in the form of a hexagon socket, the polygon (22) of the nut (15) being manipulatable through a perforation (23) in the pull member (3) and the polygon (21) of the nut (14) being manipulatable through a tapped tool-receiving hole (24) of the front portion (2).

4. Device according to any one of claims 1 and 3, characterised in that it does not comprise a shouldered screw (8), the pull member (3) being a long pull member centred round the rear of the cone (1) and fixed in the thread of the front portion (2), the mutual locking of the cone (1) and of the front portion (2) being achieved by the gripping of the long pull member and then the locking of the unit by application of the nut (14) to said long pull member.

5. Device according to any one of claims 1 to 4, characterised in that it is provided with a modular tool holder element (25, 29) fixed by a modular system comprising two spherically tipped screws (27) arranged at 120° and a tenon (28) on a male modular element (30) mounted in the device and provided with spherical impressions (31) which are slightly elongated in the circumferential direction allowing height adjustment of the tool holder (29) by means of tangential screws (32) resting on the tenon (28) housed in a wider groove (33) of the collar of the front part (2).

6. Device according to any one of claims 1 to 4, characterised in that it is mounted by its cone (1) in a cartridge (39) with the collar of its front face resting on said cartridge which is equipped, in the region of the pull member (3) of the device, with a body (40) in which there is displacably mounted a piston (41) which receives the end of the pull member (3), is equipped with retaining beads (42) guided in housings (43) and is provided with a travel limiting screw (44) guided in a groove (45) of the body (40), the piston (41) being displacable in the body (40) by means of a screw (46) which is locked in translation by means of an end plate (47) mounted on the end of the cartridge (39) and of the body (40) above the recess for receiving the head of the screw (46) and having a hole (48) for the passage of a spanner for manipulating said screw (46), preferably with a hexagon socket head, the rotational engagement between the cartridge (39) and the body (40) being achieved by means of a resilient pin (50) fixed in the body (40) and traversing the end plate (47), the body (40) also having a countersunk region (51) in its front portion.

7. Device according to any one of claims 1 to 4, characterised in that it is mounted by its cone (1) in a fixing cartridge (39') and rests, with its collar, against the front face of said cartridge (39') which is also equipped with a casing (40') consisting of a body (52) in which there is slidably mounted a piston (53) having, on its front face, a housing for receiving the portion for gripping the pull member (3) and which is provided on its periphery with retaining beads (54) guided in housings (55) and capable of escaping toward the exterior in a countersunk region (56) in the front portion of the body (52), a stack of Belleville washers (57) resting, at one end, on the one hand in a countersunk region in the rear portion of the body (52) and, on the other hand, at its other end, against the head of a screw (58) penetrating the rear face of the piston (53), the body (52) being held in the cartridge (39') by means of an end plate (47') fixed on said cartridge (39') by screws (49'), this end plate (47') also being equipped with a resilient pin (59) mating with a groove (60) in said body (52), for rotational engagement.

8. Device according to claim 7, characterised in that the piston (53) has a rear end-of-travel supporting shoulder in the housing of the part (52).

Fig.1

Fig. 2

Fig.3

27

30

29    28    26

Fig.5

31    31

32    33    32

Fig.4

31

Fig.6

29

35    35

34

36

12

Fig.7

37    38    26

Fig.8

39

51 43 45 44    47

48

50

3  42  40    41  46

EP 0 340 369 B1

# Fig.9

14